# EUROPEAN PATENT APPLICATION

(11) **EP 3 435 311 A1**
(43) Date of publication of application: **30.01.2019**
(21) Application number: 17769319.9
(22) Date of filing: 10.03.2017
(51) Int. Cl.: G06Q 20/40

(54) **METHOD, SYSTEM, AND APPARATUS FOR PAYMENT AUTHORIZATION AND PAYMENT BY MEANS OF WEARABLE DEVICE**

(30) Priority: 22.03.2016 CN 201610166688
(71) Applicant: Alibaba Group Holding Limited, Grand Cayman (KY)
(72) Inventor: WU, Chao, Hangzhou Zhejiang 311121 (CN)
(74) Representative: Conroy, John
(86) International application number: PCT/CN2017/076226
(87) International publication number: WO 2017/162042

(57) **Abstract**

The present application discloses a method, a system, and an apparatus for payment authorization and payment using a wearable device. The method includes receiving a payment token of a wearable device sent by the wearable device; sending the payment token to a payment server for verification; and receiving service content returned by the payment server and providing the service content for a user after the verification succeeds, where the payment server performs payment processing after the payment token is verified. In the method, the wearable device is associated with the payment server, so that a real-time offline payment function can be implemented on the wearable device, and user experience can be enhanced.

## Description

The present application claims priority to Chinese Patent Application No. 201610166688.X, filed on March 22, 2016 and entitled "METHOD, SYSTEM, AND APPARATUS FOR PAYMENT AUTHORIZATION AND PAYMENT BY MEANS OF WEARABLE DEVICE", which is incorporated herein by reference in its entirety.

### TECHNICAL FIELD

The present application pertains to the field of payment technologies, and in particular, to a method, a system, and an apparatus for payment authorization and payment using a wearable device.

### BACKGROUND

With the development of mobile payment technologies, a user can perform payment on a wearable device. For example, the user can recharge his bus IC card in advance at the recharge center, so that the user can complete payment by using a smart ring with a built-in IC card chip while taking a bus.

However, only the recharged amount can be spent based on the above payment method using a wearable device. When a balance is insufficient, the payment function of the wearable device can be implemented only through recharging, which is inconvenient. In addition, when the wearable device is lost, the user cannot prevent another person from using the wearable device for payment, resulting in the user's property loss.

### SUMMARY

The present application aims to resolve at least one of the previous technical problems.

In view of the above, the first objective of the present application is to provide a payment method using a wearable device. In the method, a wearable device is associated with a payment server, so that a real-time offline payment function can be implemented on the wearable device, and user experience can be improved.

The second objective of the present application is to provide another payment method using a wearable device.

The third objective of the present application is to provide a method for performing payment authorization on a wearable device.

The fourth objective of the present application is to provide another payment method using a wearable device.

The fifth objective of the present application is to provide a system for payment using a wearable device.

The sixth objective of the present application is to provide a merchant device terminal.

The seventh objective of the present application is to provide a wearable device.

The eighth objective of the present application is to provide a mobile device.

The ninth objective of the present application is to provide a payment server.

To achieve the previous objectives, an implementation of the first aspect of the present application provides a payment method using a wearable device, including the following steps: receiving a payment token of a wearable device sent by the wearable device; sending the payment token to a payment server for verification; and receiving service content returned by the payment server, and providing the service content for a user after the verification succeeds, where the payment server performs payment processing after the payment token is verified.

In the payment method using a wearable device in this implementation of the present application, the received payment token of the wearable device is sent to the payment server for verification, and the service content returned by the payment server is received and the service content is provided for the user after the verification succeeds. As such, the wearable device is associated with the payment server, so that a real-time offline payment function can be implemented on the wearable device, and user experience can be enhanced.

To achieve the previous objectives, an implementation of the second aspect of the present application provides a payment method using a wearable device, including the following steps: receiving a predetermined instruction of a user; and sending a payment token of a wearable device based on the predetermined instruction, where a merchant device terminal performs verification based on the payment token, and provides a merchandise transaction service for the user after the verification succeeds, and a payment server performs payment processing after the payment token is verified.

In the payment method using a wearable device in this implementation of the present application, the payment token of the wearable device is sent based on the received predetermined instruction of the user, and the merchant device terminal performs verification based on the payment certificate, and provides the merchandise transaction service for the user after the verification succeeds. As such, a real-time offline payment function can be implemented on the wearable device, so that the merchant device terminal can provide the merchandise transaction service for the user, thereby enhancing user experience.

To achieve the previous objectives, an implementation of the third aspect of the present application provides a method for performing payment authorization on a wearable device, including the following steps: sending an authorization request to a wearable device; receiving a user key sent by the wearable device based on the authorization request; sending the user key to a payment server; receiving a payment token generated by the payment server based on the user key; and sending the payment token to the wearable device to perform payment authorization on the wearable device.

In the method for performing payment authorization on a wearable device in this implementation of the present application, the payment server receives the user key sent by the wearable device based on the authorization request, so that the payment server generates the payment token based on the user key, and the wearable device is authorized to perform a payment operation. As such, the wearable device is associated with the payment server, so that a real-time offline payment function can be implemented on the wearable device, and user experience can be enhanced.

To achieve the previous objectives, an implementation of the fourth aspect of the present application provides a payment method using a wearable device, including the following steps: receiving a payment token of a wearable device sent by a merchant device terminal; performing verification based on the payment token; and sending service content corresponding to the merchant device terminal to the merchant device terminal after the verification succeeds, and performing payment processing after the payment token is verified.

In the payment method using a wearable device in this implementation of the present application, verification is performed on the received payment token of the wearable device sent by the merchant device terminal, and the service content corresponding to the merchant device terminal is sent to the merchant device terminal after the verification succeeds. As such, a real-time offline payment function can be implemented on the wearable device, and user experience can be enhanced.

To achieve the previous objectives, an implementation of the fifth aspect of the present application provides a system for payment using a wearable device, including a wearable device, a merchant device terminal, and a payment server. The wearable device is configured to send a payment token of the wearable device. The merchant device terminal is configured to send the payment token to the payment server for verification, receive service content returned by the payment server, and provide the service content for a user. The payment server is configured to perform verification based on the payment token, send the service content to the merchant device terminal after the verification succeeds, and perform payment processing after the payment token is verified.

In the system for payment using a wearable device in this implementation of the present application, the wearable device sends the payment token of the wearable device. The payment server performs verification based on the payment token, and sends the service content to the merchant device terminal after the verification succeeds. The merchant device terminal sends the payment token to the payment server for verification, and receives verification content returned by the payment server to provide the service content for the user. As such, the wearable device is associated with the payment server, so that a real-time offline payment function can be implemented on the wearable device, and user experience can be enhanced.

To achieve the previous objectives, an implementation of the sixth aspect of the present application provides a merchant device terminal, including: a first receiving module, configured to receive a payment token of a wearable device sent by the wearable device; a first sending module, configured to send the payment token to a payment server for verification; a second receiving module, configured to receive service content returned by the payment server after the verification succeeds; and a providing module, configured to provide the service content for a user.

The merchant device terminal in this implementation of the present application receives the payment token of the wearable device sent by the wearable device, sends the payment token of the wearable device to the payment server for verification, and receives the service content returned by the payment server and provides the service content for the user after the verification succeeds. As such, a real-time offline payment function can be implemented on the wearable device, and user experience can be enhanced.

To achieve the previous objectives, an implementation of the seventh aspect of the present application provides a wearable device, including: a third receiving module, configured to receive a predetermined instruction of a user; and a sending module, configured to send a payment token of the wearable device based on the predetermined instruction, where a merchant device terminal performs the payment token, and provides a merchandise transaction service for the user after the verification succeeds.

The wearable device in this implementation of the present application receives the predetermined instruction of the user, and sends the payment token of the wearable device based on the predetermined instruction, so that the merchant device terminal performs verification based on the payment token, and provides the merchandise transaction service for the user after the verification succeeds. As such, a real-time offline payment function can be implemented on the wearable device, and user experience can be enhanced.

To achieve the previous objectives, an implementation of the eighth aspect of the present application provides a mobile device, including: a third sending module, configured to send an authorization request to a wearable device; a sixth receiving module, configured to receive a user key sent by the wearable device based on the authorization request; a fourth sending module, configured to send the user key to a payment server; a seventh receiving module, configured to receive a payment token generated by the payment server based on the user key; and a fifth sending module, configured to send the payment token to the wearable device to perform payment authorization on the wearable device.

The mobile device in this implementation of the present application receives the user key sent by the wearable device based on the authorization request by the payment server, so the payment server generates the payment token based on the user key, and sends the payment token to the wearable device to perform payment authorization on the wearable device. As such, a real-time offline payment function can be implemented on the wearable device, and user experience can be enhanced.

To achieve the previous objectives, an implementation of the ninth aspect of the present application provides a payment server, including: an eighth receiving module, configured to receive a payment token of a wearable device sent by a merchant device terminal; a verification module, configured to perform verification based on the payment token; a sixth sending module, configured to send service content corresponding to the merchant device terminal to the merchant device terminal after the verification succeeds; and a payment processing module, configured to perform payment processing after the payment token is verified.

The payment server in this implementation of the present application performs verification based on the received payment token of the wearable device sent by the merchant device terminal, and sends the service content corresponding to the merchant device terminal to the merchant device terminal after the verification succeeds. As such, a real-time offline payment function can be implemented on the wearable device, and user experience can be enhanced.

Some additional aspects and advantages of the present application are provided in the following descriptions, are apparent in the following descriptions, or are understandable through practice of the present application.

### BRIEF DESCRIPTION OF DRAWINGS

The earlier described and/or additional aspects and advantages of the present application are apparent and comprehensible in the following descriptions of implementations with reference to the accompanying drawings.
FIG. 1 is a flowchart illustrating a payment method using a wearable device, according to an implementation of the present application;
FIG. 2 is a flowchart illustrating a method for performing payment authorization on a wearable device, according to an implementation of the present application;
FIG. 3 (a) to FIG. 3 (e) are schematic flowcharts illustrating a smart ring binding process, according to an implementation of the present application;
FIG. 4 is a flowchart illustrating a payment method using a wearable device, according to an implementation of the present application;
FIG. 5 is a schematic flowchart illustrating offline payment completed by a wearable device, according to an implementation of the present application;
FIG. 6 is a flowchart illustrating a method for performing payment authorization on a wearable device, according to an implementation of the present application;
FIG. 7 is a schematic flowchart illustrating performing payment authorization on a wearable device, according to an implementation of the present application;
FIG. 8 is a flowchart illustrating a payment method using a wearable device, according to an implementation of the present application;
FIG. 9 is a schematic diagram illustrating a system for payment using a wearable device, according to an implementation of the present application;
FIG. 10 is a schematic diagram illustrating a system for payment using a wearable device, according to an implementation of the present application;
FIG. 11 is a schematic diagram illustrating a merchant device terminal, according to an implementation of the present application;
FIG. 12 is a schematic diagram illustrating a wearable device, according to an implementation of the present application;
FIG. 13 is a schematic diagram illustrating a wearable device, according to an implementation of the present application;
FIG. 14 is a schematic diagram illustrating a mobile device, according to an implementation of the present application;
FIG. 15 is a schematic diagram illustrating a payment server, according to an implementation of the present application; and
FIG. 16 is a schematic diagram illustrating a payment server, according to an implementation of the present application.

### DESCRIPTION OF IMPLEMENTATIONS

The implementations of the present application are described in detail below. Examples of the implementations are illustrated in the accompanying drawings. Reference signs that keep the same or similar from beginning to end represent the same or similar elements or elements with same or similar functions. The implementations described below with reference to the accompanying drawings are examples, are merely intended for explaining the present application, and should not be construed as a limitation on the present application.

In a payment method using a wearable device provided in the present application, after verifying a payment token of a wearable device, a payment server provides corresponding service content for a user, so that a real-time offline payment function can be implemented on the wearable device.

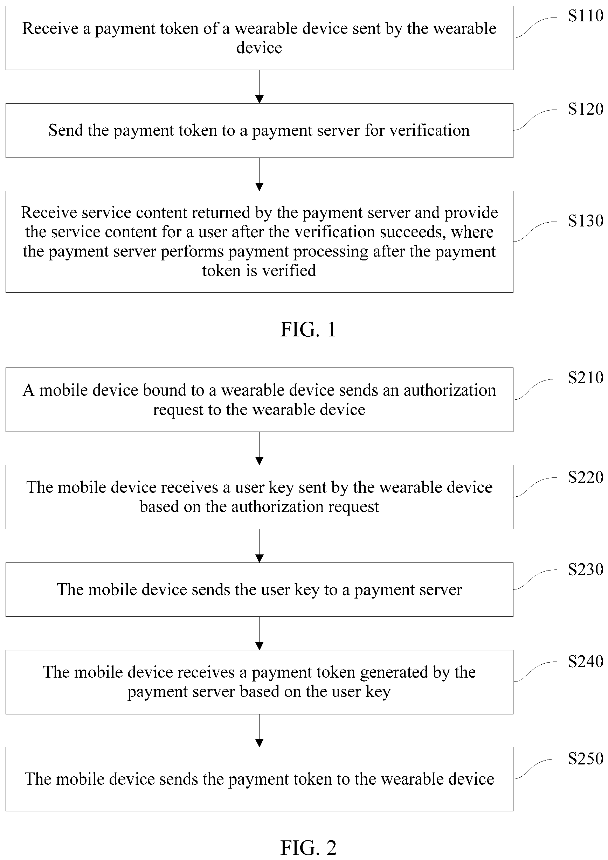

FIG. 1 is a flowchart illustrating a payment method using a wearable device, according to an implementation of the present application. In this implementation, the payment method using a wearable device is described by using a merchant device terminal. It is worthwhile to note that the wearable device in this implementation of the present application can be a smart ring, a smart watch, smart glasses, etc. To implement a payment function by a wearable device in this implementation of the present application, the wearable device can include an OpenSSL cryptography library. In addition, the wearable device can correspondingly support the Bluetooth protocol, the Near Field Communication (NFC) protocol, etc., based on technologies different from a connection technology used by another device.

Further, it is worthwhile to note that a mobile device in this implementation of the present application can be a hardware device with various operating systems, such as a mobile phone, a tablet computer, a personal digital assistant, etc. The hardware device supports a connection technology used by the wearable device in this implementation of the present application. For example, if the wearable device uses the Bluetooth protocol 4.0, the corresponding mobile device also supports the Bluetooth protocol 4.0.

As shown in FIG. 1, the payment method using a wearable device includes the following steps.

S110. Receive a payment token of a wearable device sent by the wearable device.

To implement the payment method using a wearable device in this implementation of the present application, the wearable device first needs to be authorized. FIG. 2 is a flowchart illustrating a method for performing payment authorization on a wearable device, according to an implementation of the present application. As shown in FIG. 2, the method for performing payment authorization on a wearable device includes the following steps.

S210. A mobile device bound to the wearable device sends an authorization request to the wearable device.

The mobile device can first scan a nearby specified wearable device in advance. For example, the mobile device scans a wearable device that supports the payment application standard Bluetooth protocol through Bluetooth, and establishes a Bluetooth communication connection between the mobile device and the scanned wearable device.

Before the communication connection is established, a Bluetooth address, model information and such of the scanned wearable device can be further obtained. The Bluetooth communication connection between the mobile device and the scanned wearable device can be established only when the obtained Bluetooth address and the obtained model information are the same as a Bluetooth address and model information that are identified through scanning.

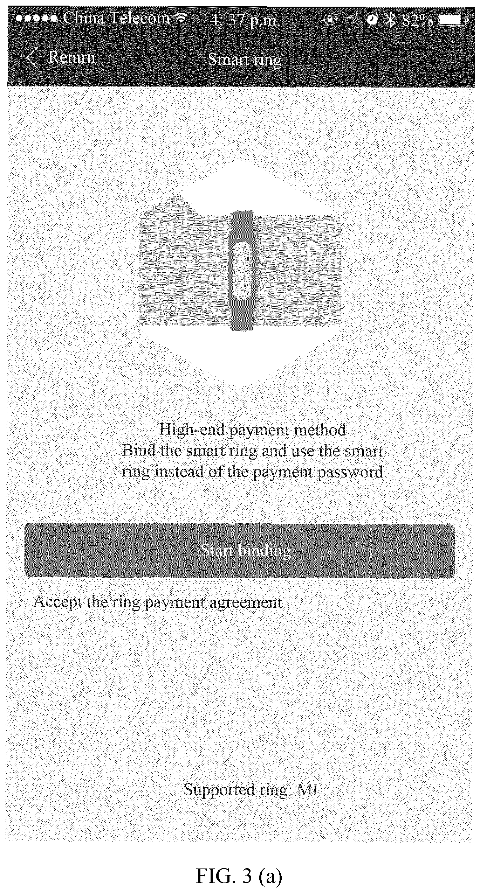

To describe a process of binding the wearable device to the mobile device clearer, the following describes a method for authorizing the wearable device with reference to FIG. 3 (a) to FIG. 3 (e). In this example, the wearable device is a smart ring, and the mobile device is a mobile phone. The descriptions are as follows:

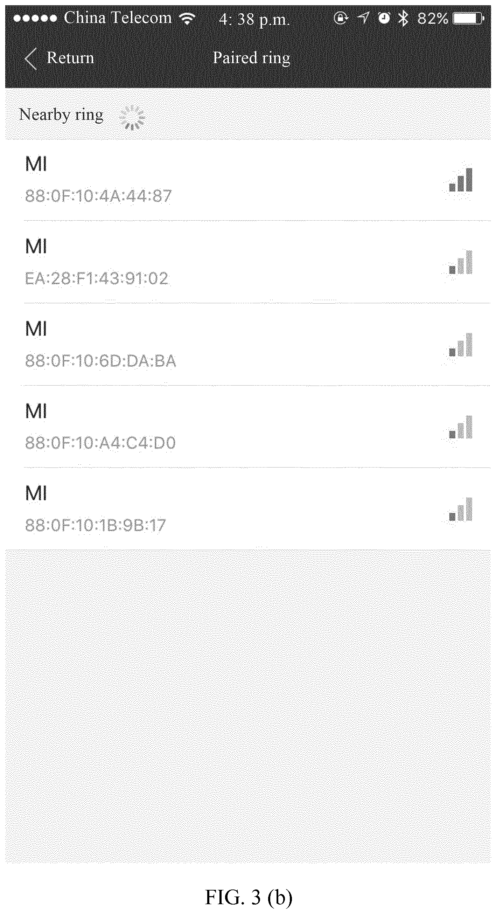

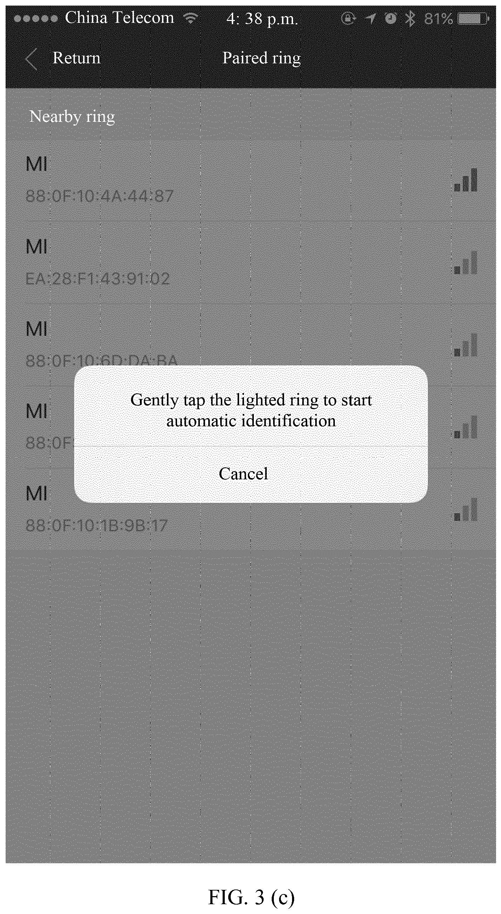

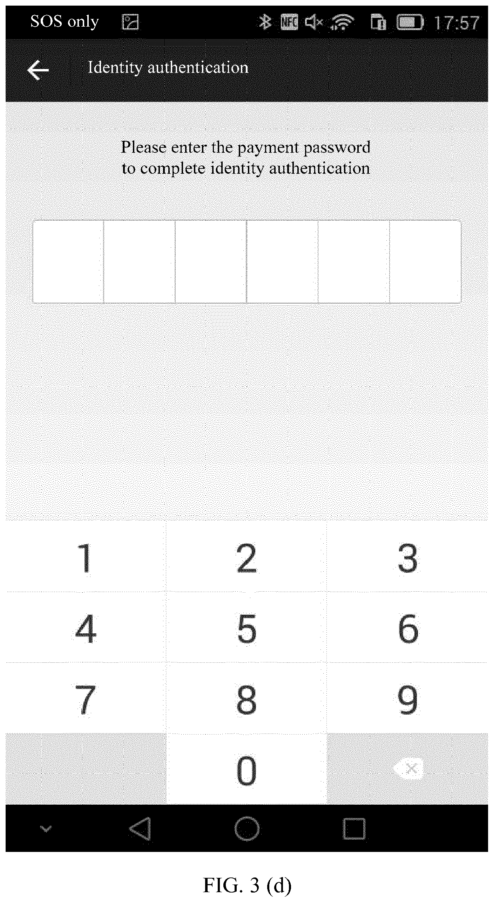

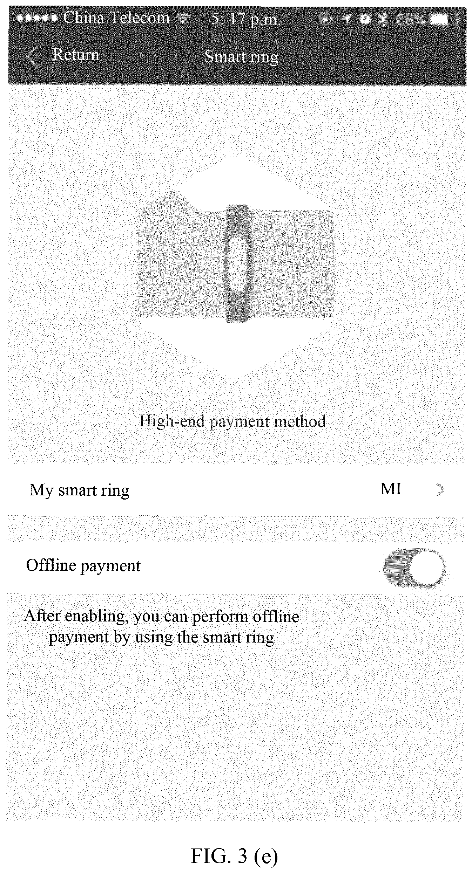

First, as shown in FIG. 3 (a), a payment application interface on the mobile phone is entered to perform a corresponding operation of determining a binding menu and to bind a smart ring. Then, as shown in FIG. 3 (b), the payment application scans a nearby specified smart wearable device through Bluetooth, and only a wearable device that supports the payment application standard Bluetooth protocol can be scanned. In addition, as shown in FIG. 3 (b), scanned wearable devices can be displayed in a list. Further, as shown in FIG. 3 (c), related prompt information is sent to a user to prompt the user to perform the determining operation on the smart ring. As shown in FIG. 3 (d), after the user taps the lighted smart ring based on the prompt information in FIG. 3 (c), the user enters a payment password on the payment application to verify the user's identity. As shown in FIG. 3 (e), after the verification succeeds, a corresponding payment procedure can be enabled to bind the smart ring to the mobile phone.

It should be understood that the wearable device binds a related payment account of the user by using the payment application on the mobile device, such as a bank card, a coupon, or electronic bonus points of the user.

S220. The mobile device receives a user key sent by the wearable device based on the authorization request.

Based on the previous implementation, after receiving the authorization request, the wearable device can randomly generate the user key for the authorization request based on the device information such as the Bluetooth address and the device model of the wearable device by using the OpenSSL cryptography library, and send the user key to the mobile device.

S230. The mobile device sends the user key to a payment server.

S240. The mobile device receives the payment token generated by the payment server based on the user key.

To implement offline payment by the wearable device and ensure property security of the user, the payment server generates the payment token based on the user key.

It is worthwhile to note that, the payment token corresponds to the wearable device, the Bluetooth model and the device information of the wearable device, the payment account of the user, etc. The payment token is unique, and is a "token" issued by the payment server to the wearable device bound to the payment account. One "token" corresponds to one wearable device.

In an example, the payment token can include a device token of the wearable device and a user token. The device token can correspond to various device information of the wearable device. For example, the device token can correspond to a type and a model of the wearable device, and one device token corresponds to one wearable device. In addition, the user account token is used to uniquely identify an account, and can include the user's account nickname, identity (ID), etc. An account token of one user corresponds to one payment account, etc. of the user.

Further, in an implementation of the present application, to ensure authorization security, the payment server can encrypt the generated payment token, and send the encrypted payment token to the mobile device.

S250. The mobile device sends the payment token to the wearable device.

The wearable device can encrypt and store the received payment token. In this case, the wearable device that obtains the payment token is successfully authorized. The authorization is valid permanently. The authorized wearable device has been bound to the payment account of the user and a bank card, a coupon, and electronic bonus points of the user.

Further, for a sending event of the payment token, a corresponding instruction can be predetermined and stored in advance, so that the stored predetermined instruction is queried based on a received user instruction, and it is determined whether the instruction is the predetermined instruction to further determine whether to invoke the sending event of the payment token. It should be understood that there are a plurality of predetermined instructions. The plurality of predetermined instructions can be specified by a system, or can be specified by the user based on an operation habit and a preference of the user. An example is used for description below:

In an example, the predetermined instruction can include a tapping instruction. When the wearable device receives the tapping instruction of the user, and tapping frequency falls within a first predetermined frequency range, it is determined that the user instruction is the predetermined instruction.

In an example, the predetermined instruction can include a shaking instruction. When the wearable device receives the shaking instruction of the user, and shaking frequency falls within a second predetermined frequency range, it is determined that the user instruction is the predetermined instruction.

In an example, the predetermined instruction can include a rotation instruction. When the wearable device receives the rotation instruction of the user, and rotation amplitude falls within a predetermined amplitude range, it is determined that the user instruction is the predetermined instruction.

Further, after receiving the predetermined instruction of the user, the wearable device can read the stored payment token based on the predetermined instruction, and decrypt and send the payment token. The mobile device can receive, through Bluetooth or NFC, the payment token of the wearable device sent by the wearable device.

S120. Send the payment token to the payment server for verification.

To verify whether a wearable device that requests a service is a wearable device that is originally authorized, the payment token is sent to the payment server for verification.

S130. Receive service content returned by the payment server and provide the service content for a user after the verification succeeds, where the payment server performs payment processing after the payment token is verified.

It can be understood that after validity of the payment token is verified, a service functional zone in the payment server can perform service matching on the payment token sent by a merchant device terminal, to obtain service content requested by the wearable device. The merchant device terminal receives the service content returned by the payment server and provides the corresponding service content for the user, for example, providing a movie ticket.

In the previous implementation, after the payment token is verified, the payment server performs a corresponding payment processing operation (for example, fee deduction) based on the corresponding service content, and sends a payment notification to the mobile device bound to the wearable device after completing the payment processing. The payment notification can include information such as a payment amount, merchandise information, and a payment location, so that the user can know real-time changes of funds.

In another implementation of the present application, in addition to the payment function described in the previous implementation, the wearable device can implement a verification function such as collecting a ticket. For example, when the user carries the wearable device such as a smart ring bound to the mobile device, the user can operate the wearable device by tapping, shaking, operating a corresponding menu key in front of a ticket machine at a cinema, so that after receiving the instruction, the ticket machine automatically prints a ticket that the user has already purchased on a payment application. It is worthwhile to note that the function can also be applied to another scenario such as collecting a travel ticket, and details are not described here.

In another implementation of the present application, after the wearable device of the user is lost, the wearable device can be unbound by a corresponding payment application on the mobile device, so that a payment function of the wearable device becomes invalid, ensuring property security of the user.

In the payment method using a wearable device in this implementation of the present application, the received payment token of the wearable device is sent to the payment server for verification, and the service content returned by the payment server is received and the service content is provided for the user after the verification succeeds. As such, the wearable device is associated with the payment server, so that a real-time offline payment function can be implemented on the wearable device, and payment can be made by using a payment account of the user. In addition, one-time authorization can be valid permanently, offline payment can be implemented, and user experience can be enhanced.

In another payment method using a wearable device provided in the present application, a payment token of a wearable device is sent based on a predetermined instruction of a user, so that a merchant device terminal performs verification based on the payment token, and provides a merchandise transaction service for the user after the verification succeeds.

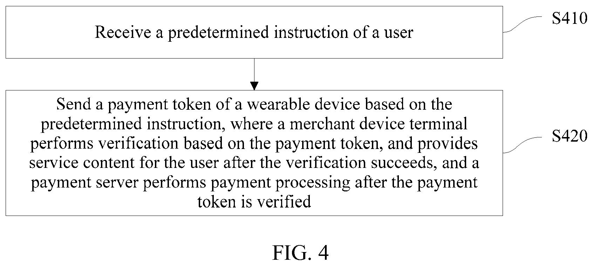

To comprehensively describe the payment method using a wearable device in this implementation of the present application, the following implementation describes the payment method using a wearable device by using a wearable device. FIG. 4 is a flowchart illustrating a payment method using a wearable device, according to an implementation of the present application. As shown in FIG. 4, the payment method using a wearable device includes the following steps.

S410. Receive a predetermined instruction of a user.

For a sending event of a payment token, a corresponding instruction can be predetermined and stored in advance, so that the stored predetermined instruction is queried based on a received user instruction, and it is determined whether the user instruction is the predetermined instruction to further determine whether to invoke the sending event of the payment token. It should be understood that there are a plurality of predetermined instructions. The plurality of predetermined instructions can be specified by a system, or can be specified by the user based on an operation habit and a preference of the user. An example is used for description below:

In an example, the predetermined instruction can include a tapping instruction. When the wearable device receives the tapping instruction of the user, and tapping frequency falls within a first predetermined frequency range, it is determined that the user instruction is the predetermined instruction.

In an example, the predetermined instruction can include a shaking instruction. When the wearable device receives the shaking instruction of the user, and shaking frequency falls within a second predetermined frequency range, it is determined that the user instruction is the predetermined instruction.

In an example, the predetermined instruction can include a rotation instruction. When the wearable device receives the rotation instruction of the user, and rotation amplitude falls within a predetermined amplitude range, it is determined that the user instruction is the predetermined instruction.

That is, when the user instruction is identified as the predetermined instruction, it is acknowledged that the predetermined instruction is received.

S420. Send a payment token of a wearable device based on the predetermined instruction, where a merchant device terminal performs verification based on the payment token, and provides service content for the user after the verification succeeds, and a payment server performs payment processing after the payment token is verified.

Based on the previous implementation, after receiving the predetermined instruction of the user, the wearable device can read the stored payment token based on the predetermined instruction, and decrypt the payment token and send the decrypted payment token to the merchant device terminal. The wearable device can send the payment token of the wearable device through Bluetooth or NFC.

Further, the merchant device terminal receives the payment token sent by the wearable device and sends the payment token to the payment server for verification. It can be understood that after validity of the payment token is verified, a service functional zone in the payment server can perform service matching on the payment token sent by the merchant device terminal, to obtain service content requested by the wearable device. The merchant device terminal receives the service content returned by the payment server, and provides the corresponding service content for the user, for example, providing a movie ticket.

In the previous implementation, after the payment token is verified, the payment server performs a corresponding payment processing operation based on the corresponding service content, and sends a payment notification to the mobile device bound to the wearable device after completing the payment processing. The payment notification can include information such as a payment amount, merchandise information, and a payment location, so that the user can know real-time changes of funds.

For descriptions of the method for obtaining the payment token by the wearable device, refer to the descriptions of the method for performing payment authorization on a wearable device in FIG. 2. Details are not described here again.

It is worthwhile to note that the merchant device terminal can be a device that provides merchandise or service for the user, for example, an automatic vending machine, a movie ticket machine, or a merchant's cashier.

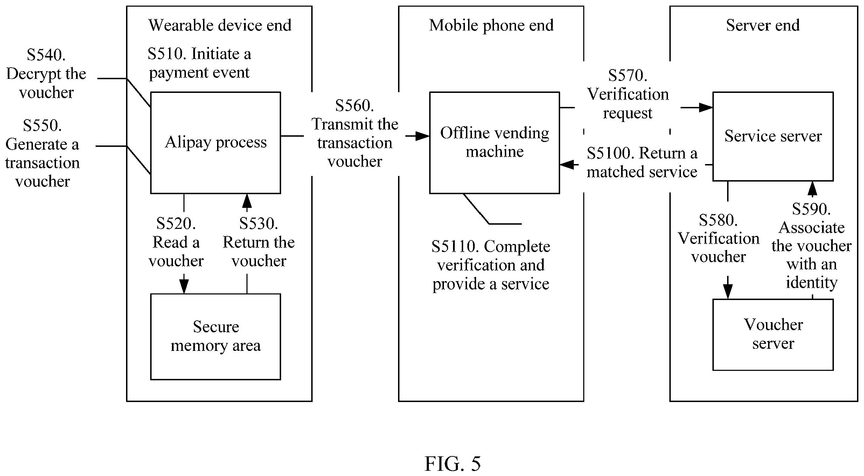

To make a person skilled in the art better understand the implementations of the present application, an example is used to describe an offline payment procedure of a wearable device with reference to FIG. 5. In this example, a payment account bound by a user is an Alipay account. As shown in FIG. 5, a payment event can be initiated on a wearable device based on a predetermined instruction of the user (S5 10), a payment token in a secure memory area in the wearable device is read (S520), and the payment token is returned to an Alipay process of the wearable device (S530), so that the Alipay process decrypts the token (S540), generates a transaction token based on the token (S550), and transmits the transaction token to an offline vending machine of a merchant device terminal (S560). The merchant device terminal sends a verification request to a payment server based on the transaction token (S570), and after receiving the verification request, a service server in the payment server sends a verification token generated based on the verification request to a token server (S580), so that the token server is associated with an identity of the user (S590). The service server in the payment server obtains a matched service based on the user identity associated with the token, and returns the matched service to the offline vending machine (S5100). Then, the offline vending machine completes verification, and provides a related service for the user (S5110).

In the payment method using a wearable device provided in this implementation of the present application, the payment token of the wearable device is sent based on the predetermined instruction of the user, so that the merchant device terminal performs verification based on the payment token, and provides the corresponding service content for the user after the verification succeeds. As such, offline payment can be implemented by the wearable device. The payment notification is sent to notify the user of related consumption information, so that the user's consumption is more intuitive, and user experience can be enhanced.

In a method for performing payment authorization on a wearable device provided in the present application, a payment server generates a payment token of a wearable device by using a user key that is sent by the wearable device based on an authorization request, to send the payment token to the wearable device to authorize the wearable device, so that the wearable device is associated with the payment server.

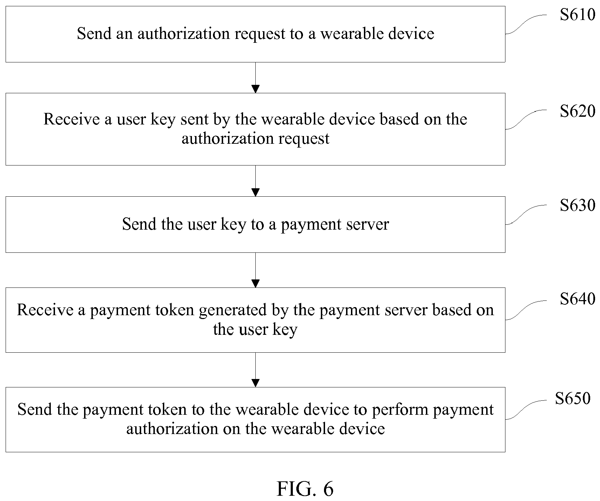

It is worthwhile to note that in this implementation of the present application, the method is described by using a mobile device. FIG. 6 is a flowchart illustrating a method for performing payment authorization on a wearable device, according to an implementation of the present application. As shown in FIG. 6, the method for performing payment authorization on a wearable device includes the following steps.

S610. Send an authorization request to a wearable device.

S620. Receive a user key sent by the wearable device based on the authorization request.

In an implementation of the present application, after a mobile device sends the authorization request to the wearable device, OpenSSL in the wearable device randomly generates the user key based on Bluetooth model information, device information and such of the wearable device, and sends the user key to the mobile device.

S630. Send the user key to a payment server.

S640. Receive a payment token generated by the payment server based on the user key.

In an implementation of the present application, to implement offline payment by the wearable device and ensure property security of a user, the payment server generates the payment token based on the user key, so that the payment server further verifies, based on the payment token, validity of the wearable device that initiates payment.

It is worthwhile to note that, the payment token corresponds to the wearable device, the Bluetooth model and the device information of the wearable device, a payment account of the user, etc. The payment token is unique, and is a "token" issued by the payment server to the wearable device bound to the payment account. One "token" corresponds to one wearable device.

In an example, the payment token can include a device token of the wearable device and a user token. The device token can correspond to various device information of the wearable device. For example, the device token can correspond to a type and a model of the wearable device, and one device token corresponds to one wearable device. In addition, the user account token is used to uniquely identify an account, and can include the user's account nickname, identity (ID), etc. An account token of one user corresponds to one payment account and such of the user.

S650. Send the payment token to the wearable device to perform payment authorization on the wearable device.

It is worthwhile to note that descriptions of the method implementation for payment using a wearable device in FIG. 6 correspond to the flowchart illustrating the method for performing payment authorization on a wearable device in FIG. 2, and the method corresponds to steps of the method in FIG. 2. Details are not described here again.

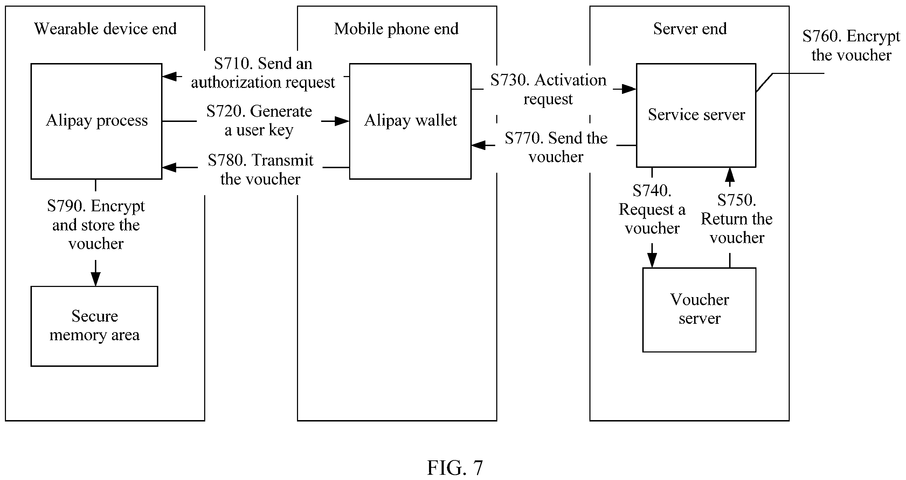

To make a person skilled in the art understand the implementations of the present application clearer, an example is used to describe a method for performing payment authorization on a wearable device. In this example, a wearable device is a smart ring, and a mobile device is a mobile phone. The descriptions are as follows:
As shown in FIG. 7, the method for performing payment authorization on a wearable device can include the following steps: S710. A mobile phone sends an authorization request to a wearable device. S720. An Alipay process in the wearable device generates a user key based on the request, and sends the key to the Alipay wallet of a user. S730. The Alipay wallet sends a request of activating offline payment of the wearable device to an Alipay server. S740. The Alipay wallet requests a payment token to the Alipay server. S750. A token server returns the corresponding payment token based on the request, where the payment token corresponds to device information and Bluetooth model information of the wearable device, account information of the user, etc. S760. A service server in the Alipay server encrypts the payment token. S770. The service server sends the payment token to the Alipay wallet of the mobile phone. S780. The Alipay wallet transmits the payment token to the wearable device. S790. The wearable device encrypts the payment token and stores the encrypted payment token in a secure memory area, to complete payment authorization on the wearable device.

In the method for performing payment authorization on a wearable device in this implementation of the present application, the payment server receives the user key sent by the wearable device based on the authorization request, so that the payment server generates the payment token based on the user key, and the wearable device is authorized to perform a payment operation. As such, the wearable device is associated with the payment server, so that a real-time offline payment function can be implemented on the wearable device, and user experience can be enhanced.

In a payment method using a wearable device provided in the present application, a payment server performs verification based on a payment token of a wearable device sent by a merchant device terminal, and sends service content corresponding to the merchant device terminal to the merchant device terminal after the verification succeeds, so that an offline real-time payment function can be implemented on the wearable device.

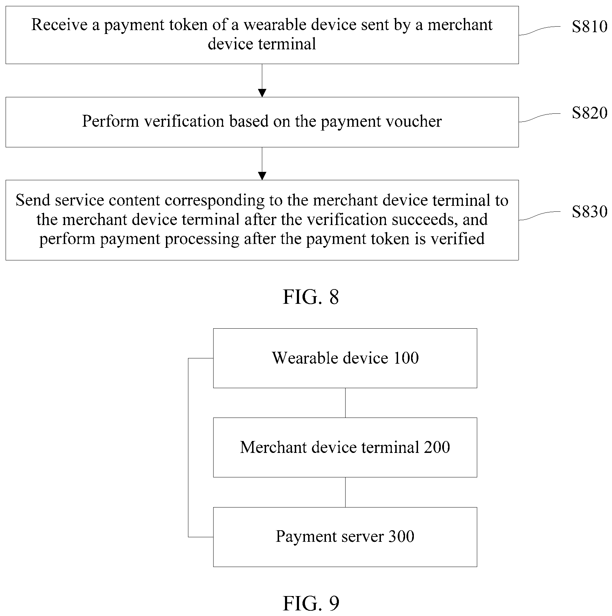

To implement the previous implementation, the present application further provides a payment method using a wearable device. This implementation of the present application is described by using a payment server. FIG. 8 is a flowchart illustrating a payment method using a wearable device, according to an implementation of the present application. As shown in FIG. 8, the payment method using a wearable device includes the following steps.

S810. Receive a payment token of a wearable device sent by a merchant device terminal.

Preferably, the payment token of the wearable device sent by the merchant device terminal can be received through Bluetooth or Near Field Communication (NFC).

It is worthwhile to note that, the payment token corresponds to the wearable device, a Bluetooth model and device information of the wearable device, a payment account of a user, etc. The payment token is unique, and is a "token" issued by a payment server to the wearable device bound to the payment account. One "token" corresponds to one wearable device.

In an example, the payment token can include a device token of the wearable device and a user token. The device token can correspond to various device information of the wearable device. For example, the device token can correspond to a type and a model of the wearable device, and one device token corresponds to one wearable device. In addition, the user account token is used to uniquely identify an account, and can include the user's account nickname, identity (ID), etc. An account token of one user corresponds to one user account.

For descriptions of the method for obtaining the payment token by the wearable device, refer to the descriptions of the method for performing payment authorization on a wearable device in FIG. 2. Details are not described here again.

S820. Perform verification based on the payment token.

S830. Send service content, corresponding to the merchant device terminal, to the merchant device terminal after the verification succeeds, and perform payment processing after the payment token is verified.

In the payment method using a wearable device in this implementation of the present application, the received payment token of the wearable device is sent to the payment server for verification, and the service content returned by the payment server is received and the service content is provided for the user after the verification succeeds. As such, the wearable device is associated with the payment server, so that a real-time offline payment function can be implemented on the wearable device, and payment can be made by using a payment account of the user. In addition, one-time authorization can be valid permanently, offline payment can be implemented, and user experience can be enhanced.

To implement the previous implementation, the present application further provides a system for payment using a wearable device. FIG. 9 is a schematic diagram illustrating a system for payment using a wearable device, according to an implementation of the present application. As shown in FIG. 9, the system for payment using a wearable device includes a wearable device 100, a merchant device terminal 200, and a payment server 300.

The wearable device 100 is configured to send a payment token of the wearable device. For example, the wearable device 100 can send the payment token through Bluetooth or NFC.

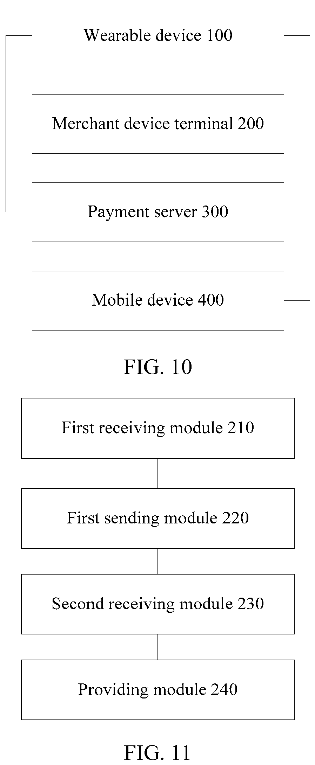

To implement this implementation, the wearable device 100 first needs to be authorized. FIG. 10 is a schematic diagram illustrating a system for payment using a wearable device, according to an implementation of the present application. As shown in FIG. 10, based on FIG. 9, the system for payment using a wearable device can further include a mobile device 400, that is, the mobile device 400 bound to the wearable device 100. The mobile device 400 is configured to send an authorization request to the wearable device 100, receive a user key sent by the wearable device based on the authorization request, send the user key to the payment server 300, and send the received payment token generated by the payment server 300 based on the user key to the wearable device 100.

In an implementation of the present application, the wearable device 100 is configured to receive a predetermined instruction of a user, and send the payment token based on the predetermined instruction.

For a sending event of the payment token, the user can predetermine and store a corresponding instruction in advance, so that the wearable device 100 queries the stored predetermined instruction based on a received user instruction, and determines whether the user instruction is the predetermined instruction to further determine whether to invoke the sending event of the payment token. It should be understood that there are a plurality of predetermined instructions. The plurality of predetermined instructions can be specified by a system, or can be specified by the user based on an operation habit and a preference of the user. An example is used for description below:
In an example, the predetermined instruction can include a tapping instruction. When the wearable device receives the tapping instruction of the user, and tapping frequency falls within a first predetermined frequency range, it is determined that the user instruction is the predetermined instruction.

In an example, the predetermined instruction can include a shaking instruction. When the wearable device receives the shaking instruction of the user, and shaking frequency falls within a second predetermined frequency range, it is determined that the user instruction is the predetermined instruction.

In an example, the predetermined instruction can include a rotation instruction. When the wearable device receives the rotation instruction of the user, and rotation amplitude falls within a predetermined amplitude range, it is determined that the user instruction is the predetermined instruction.

The merchant device terminal 200 is configured to send the payment token to the payment server 300 for verification, receive service content returned by the payment server 300, and provide the service content for the user.

That is, to verify whether a wearable device 100 that requests a service is a wearable device 100 that is originally authorized, the merchant device terminal 200 sends the payment token to the payment server 300 for verification.

The payment server 300 is configured to perform verification based on the payment token, send the service content to the merchant device terminal 200 after the verification succeeds, and perform payment processing after the payment token is verified.

It can be understood that after validity of the payment token is verified, a service functional zone in the payment server 300 can perform service matching on the payment token, sent by the merchant device terminal 200, to obtain service content requested by the wearable device 100. The merchant device terminal 200 receives the service content returned by the payment server 300, and provides the corresponding service content for the user, for example, providing a movie ticket.

In an implementation of the present application, the payment server 300 is further configured to send a payment notification to the mobile device 400 bound to the wearable device 100.

In the previous implementation, after the payment token is verified, the payment server 300 performs a corresponding payment processing operation based on the corresponding service content, and sends the payment notification to the mobile device 400 bound to the wearable device 100 after completing the payment processing. The payment notification can include information such as a payment amount, merchandise information, and a payment location, so that the user can know real-time changes of funds.

It is worthwhile to note that, for details that are not disclosed in the system for payment using a wearable device in the present application, refer to the payment method using a wearable device in the present application.

In the system for payment using a wearable device in this implementation of the present application, the received payment token of the wearable device is sent to the payment server for verification, and the service content returned by the payment server is received and the service content is provided for the user after the verification succeeds. As such, the wearable device is associated with the payment server, so that a real-time offline payment function can be implemented on the wearable device, and user experience can be enhanced.

To implement the previous implementation, the present application further provides a merchant device terminal. FIG. 11 is a schematic diagram illustrating a merchant device terminal, according to an implementation of the present application. As shown in FIG. 11, the merchant device terminal includes a first receiving module 210, a first sending module 220, a second receiving module 230, and a providing module 240.

The first receiving module 210 is configured to receive a payment token of a wearable device sent by the wearable device.

In an implementation of the present application, the first receiving module 210 can receive, through Bluetooth or NFC, the payment token of the wearable device sent by the wearable device.

In an implementation of the present application, the first receiving module 210 can first receive a predetermined instruction of a user, and send the payment token of the wearable device based on the predetermined instruction.

For a sending event of the payment token, a corresponding instruction can be predetermined and stored in advance, so that the first receiving module 210 queries the stored predetermined instruction based on a received user instruction, and determines whether the user instruction is the predetermined instruction to further determine whether to invoke the sending event of the payment token. It should be understood that there are a plurality of predetermined instructions. The plurality of predetermined instructions can be specified by a system, or can be specified by the user based on an operation habit and a preference of the user. An example is used for description below:

In an example, the predetermined instruction can include a tapping instruction. When the wearable device receives the tapping instruction of the user, and tapping frequency falls within a first predetermined frequency range, it is determined that the user instruction is the predetermined instruction.

In an example, the predetermined instruction can include a shaking instruction. When the wearable device receives the shaking instruction of the user, and shaking frequency falls within a second predetermined frequency range, it is determined that the user instruction is the predetermined instruction.

In an example, the predetermined instruction can include a rotation instruction. When the wearable device receives the rotation instruction of the user, and rotation amplitude falls within a predetermined amplitude range, it is determined that the user instruction is the predetermined instruction.

Further, after receiving the predetermined instruction of the user, the first receiving module 210 can read the stored payment token based on the predetermined instruction, and decrypt and send the payment token. The first receiving module 210 can receive the sent payment token of the wearable device through Bluetooth or NFC.

The first sending module 220 is configured to send the payment token to a payment server for verification.

After the verification succeeds, the second receiving module 230 is configured to receive service content returned by the payment server.

It can be understood that after validity of the payment token is verified, the second receiving module 230 receives the service content returned by the payment server. For example, the second receiving module 230 receives a real-time payment service or an offline payment service.

In another implementation of the present application, after the wearable device of the user is lost, the wearable device can be unbound by a corresponding payment application on the mobile device, so that a payment function of the wearable device becomes invalid, ensuring property security of the user.

The providing module 240 is configured to provide the service content for the user.

The merchant device terminal in this implementation of the present application sends the received payment token of the wearable device to the payment server for verification, and receives the service content returned by the payment server and provides the service content for the user after the verification succeeds. As such, the wearable device is associated with the payment server, so that a real-time offline payment function can be implemented on the wearable device, and payment can be made by using a payment account of the user. In addition, one-time authorization can be valid permanently, and user experience can be enhanced.

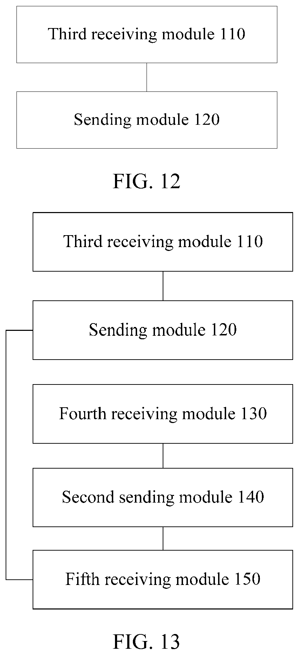

To implement the previous implementation, the present application further provides a wearable device. FIG. 12 is a schematic diagram illustrating a wearable device, according to an implementation of the present application. As shown in FIG. 12, the wearable device includes a third receiving module 110 and a sending module 120.

The third receiving module 110 is configured to receive a predetermined instruction of a user.

For a sending event of the payment token, a corresponding instruction can be predetermined and stored in advance, so that the third receiving module 110 queries the stored predetermined instruction based on a received user instruction, and determines whether the user instruction is the predetermined instruction to further determine whether to invoke the sending event of the payment token. It should be understood that there are a plurality of predetermined instructions. The plurality of predetermined instructions can be specified by a system, or can be specified by the user based on an operation habit and a preference of the user. An example is used for description below:

In an example, the predetermined instruction can include a tapping instruction. When the wearable device receives the tapping instruction of the user, and tapping frequency falls within a first predetermined frequency range, it is determined that the user instruction is the predetermined instruction.

In an example, the predetermined instruction can include a shaking instruction. When the wearable device receives the shaking instruction of the user, and shaking frequency falls within a second predetermined frequency range, it is determined that the user instruction is the predetermined instruction.

In an example, the predetermined instruction can include a rotation instruction. When the wearable device receives the rotation instruction of the user, and rotation amplitude falls within a predetermined amplitude range, it is determined that the user instruction is the predetermined instruction.

The sending module 120 is configured to send a payment token of the wearable device based on the predetermined instruction. A merchant device terminal performs verification based on the payment token, and provides a merchandise transaction service for the user after the verification succeeds.

In an implementation of the present application, as shown in FIG. 13, to obtain the payment token, the wearable device further includes a fourth receiving module 130, a second sending module 140, and a fifth receiving module 150 based on FIG. 12.

The fourth receiving module 130 is configured to receive an authorization request sent by a mobile device bound to the wearable device to the wearable device.

The second sending module 140 is configured to send a user key to the mobile device based on the authorization request. The mobile device returns the payment token to the wearable device based on the user key.

The fifth receiving module 150 is configured to receive the payment token sent by the mobile device.

That is, the wearable device obtains payment authorization by obtaining the payment token, and can always perform an offline payment function by using the payment token as a "token", so that one-time authorization can be valid permanently.

Based on the previous implementation, after obtaining the predetermined instruction of the user, the sending module 120 can send the payment token of the wearable device based on the predetermined instruction through Bluetooth or NFC.

The wearable device in this implementation of the present application sends the received payment token of the wearable device to the payment server for verification, receives the service content returned by the payment server, and provides the service content for the user after the verification succeeds. As such, the wearable device is associated with the payment server, so that a real-time offline payment function can be implemented on the wearable device, and offline payment can be made by using a payment account of the user. In addition, one-time authorization can be valid permanently, and user experience can be enhanced.

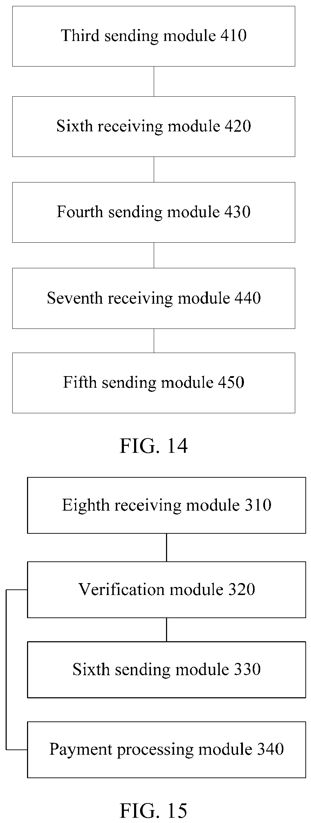

To implement the previous implementation, the present application further provides a mobile device. FIG. 14 is a schematic diagram illustrating a mobile device, according to an implementation of the present application. As shown in FIG. 14, the mobile device includes a third sending module 410, a sixth receiving module 420, a fourth sending module 430, a seventh receiving module 440, and a fifth sending module 450.

The third sending module 410 is configured to send an authorization request to a wearable device.

The sixth receiving module 420 is configured to receive a user key sent by the wearable device based on the authorization request.

The fourth sending module 430 is configured to send the user key to a payment server.

The seventh receiving module 440 is configured to receive a payment token generated by the payment server based on the user key.

The fifth sending module 450 is configured to send the payment token to the wearable device to perform payment authorization on the wearable device.

It is worthwhile to note that, for function descriptions of the mobile device, refer to function descriptions of the method for performing payment authorization on a wearable device in FIG. 2. Details are not described here again.

The mobile device in this implementation of the present application receives the user key sent by the wearable device based on the authorization request by the payment server, so the payment server generates the payment token based on the user key, and the wearable device is authorized to perform a payment operation. As such, the wearable device is associated with the payment server, so that a real-time offline payment function can be implemented on the wearable device, and user experience can be enhanced.

To implement the previous implementation, the present application further provides a payment server. FIG. 15 is a schematic diagram illustrating a payment server, according to an implementation of the present application. As shown in FIG. 15, the payment server includes an eighth receiving module 310, a verification module 320, a sixth sending module 330, and a payment processing module 340.

The eighth receiving module 310 is configured to receive a payment token of a wearable device sent by a merchant device terminal.

The verification module 320 is configured to perform verification based on the payment token.

Validity of a current transaction is determined by verifying whether the payment token is a payment token that is originally generated.

The sixth sending module 330 is configured to send service content corresponding to the merchant device terminal to the merchant device terminal after the verification succeeds.

It can be understood that, after the verification module 320 verifies that the payment token is valid, the sixth sending module 330 sends the corresponding service content to the merchant device terminal, for example, sending a real-time payment service or an offline payment service.

The payment processing module 340 is configured to perform payment processing after the payment token is verified.

It can be understood that, after the payment token is verified, payment processing is performed on a payment account bound to the wearable device to complete payment of the current transaction.

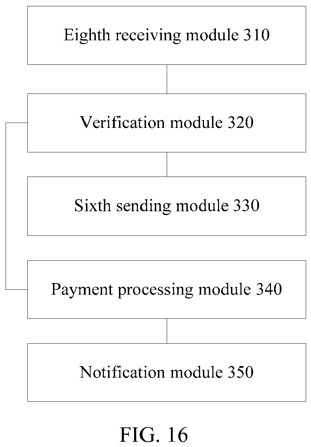

Further, FIG. 16 is a schematic diagram illustrating a payment server, according to an implementation of the present application. As shown in FIG. 16, the payment server further includes a notification module 350 based on FIG. 15.

The notification module 350 is configured to send a payment notification to a mobile device bound to the wearable device.

It is worthwhile to note that, for function descriptions of the payment server, refer to function descriptions of the payment method using a wearable device in FIG. 8. Details are not described here again.

In the system for payment using a wearable device in this implementation of the present application, the received payment token of the wearable device is sent to the payment server for verification, the service content returned by the payment server is received after the verification succeeds, and the service content is provided for the user. As such, the wearable device is associated with the payment server, so that a real-time offline payment function can be implemented on the wearable device, one-time authorization can be valid permanently, and user experience can be enhanced.

In the descriptions of the present application, it should be understood that the terms "first" and "second" are merely intended for a purpose of description, and shall not be understood as an indication or implication of relative importance or implicit indication of the number of indicated technical features. Therefore, a feature limited by "first" or "second" can explicitly or implicitly include at least one such feature. In the descriptions of the present application, "a plurality of' means at least two, for example, two or three, unless otherwise definitely limited.

In the descriptions of the present specification, descriptions about such reference terms as "an implementation", "some implementations", "an example", "a specific example", and "some examples" mean that specific features, structures, materials, or characteristics described with reference to the implementations or examples are included in at least one implementation or example of the present application. In the present specification, the previous example expressions of the terms are not necessarily for a same implementation or example. In addition, the described specific features, structures, materials, or characteristics can be combined in a proper way in any one or more of the implementations or examples. In addition, a person skilled in the art can integrate or combine different implementations or examples and characteristics of different implementations or examples described in this specification, provided that they do not conflict with each other.

Descriptions about any process or method described in a flowchart or in another way here can be understood as follows: one or more modules, segments, or parts of code of an executable instruction that is used to implement a specific logical function or operation step are included; the scope of preferred implementations of the present application includes other implementation, and functions can be performed in a sequence other than a shown or discussed sequence, including in a basically simultaneous way or a reverse sequence according to the functions concerned. This should be understood by a person skilled in the art of the implementations of the present application.

It should be understood that parts in the present application can be implemented using hardware, software, firmware, or a combination of them. In the earlier described implementations, a plurality of steps or methods can be implemented using software or firmware that is stored in a memory and that is executed by an appropriate instruction execution system. For example, if hardware is used for implementation, being similar to another implementation, any one or a combination of the following well-known technologies in the art can be used for implementation: a discrete logic circuit having a logic gate circuit that is used to implement a logical function for a data signal, an application-specific integrated circuit having an appropriate combinatorial logic circuit, a programmable gate array (PGA), a field programmable gate array (FPGA), etc.

A person of ordinary skill in the art can understand that all or some of the steps of the method implementations can be implemented by a program instructing relevant hardware. The program can be stored in a computer readable storage medium. When the program runs, one or a combination of the steps of the method implementations is performed.

In addition, functional units in the implementations of the present application can be integrated into one processing module, or each of the units can exist alone physically, or two or more units can be integrated into one module. The integrated module can be implemented in a form of hardware, or can be implemented in a form of a software functional module. When the integrated module is implemented in the form of a software functional module and sold or used as an independent product, the integrated module can be stored in a computer-readable storage medium.

The earlier described storage medium can be a read-only memory, a magnetic disk or an optical disk. Although the implementations of the present application are shown and described above, it can be understood that the earlier described implementations are examples, and cannot be construed as a limitation on the present application. Within the scope of the present application, a person of ordinary skill in the art can make changes, modifications, replacements, and variations to the earlier described implementations.

## Claims

1. A payment method using a wearable device, comprising the following steps:
receiving a payment token sent by a wearable device;
sending the payment token to a payment server for verification; and
receiving service content returned by the payment server and providing the service content for a user after the verification succeeds, wherein the payment server performs payment processing after the payment token is verified.

2. The payment method using a wearable device according to claim 1, wherein after the payment server performs payment processing, the method further comprises:
sending, by the payment server, a payment notification to a mobile device bound to the wearable device.

3. The payment method using a wearable device according to claim 1, wherein the payment token of the wearable device sent by the wearable device is received through Bluetooth or NFC.

4. The payment method using a wearable device according to claim 1, wherein before the payment token of the wearable device sent by the wearable device is received, the method further comprises:
receiving, by the wearable device, a predetermined instruction of the user; and
sending, by the wearable device, the payment token based on the predetermined instruction.

5. The payment method using a wearable device according to claim 4, wherein the predetermined instruction is acknowledged to be received when the following condition is met:
the wearable device receives a tapping instruction of the user, and tapping frequency falls within a first predetermined frequency range; or
the wearable device receives a shaking instruction of the user, and shaking frequency falls within a second predetermined frequency range; or
the wearable device receives a rotation instruction of the user, and rotation amplitude falls within a predetermined amplitude range.

6. The payment method using a wearable device according to claim 1, further comprising:
sending, by a mobile device bound to the wearable device, an authorization request to the wearable device;
receiving, by the mobile device, a user key sent by the wearable device based on the authorization request;
sending, by the mobile device, the user key to the payment server;
receiving, by the mobile device, the payment token generated by the payment server based on the user key; and
sending, by the mobile device, the payment token to the wearable device.

7. The payment method using a wearable device according to claim 6, wherein the user key is generated by performing the following step:
randomly generating, by the wearable device, the user key based on a Bluetooth address and a device model of the wearable device after receiving the authorization request.

8. A payment method using a wearable device, comprising the following steps:
receiving a predetermined instruction of a user; and
sending a payment token of a wearable device based on the predetermined instruction, wherein a merchant device terminal performs verification based on the payment token and provides service content for the user after the verification succeeds, and a payment server performs payment processing after the payment token is verified.

9. The payment method using a wearable device according to claim 8, wherein that the merchant device terminal performs verification based on the payment token comprises:
receiving, by the merchant device terminal, the payment token of the wearable device sent by the wearable device;
sending, by the merchant device terminal, the payment token to the payment server for verification; and
receiving, by the merchant device terminal, the service content returned by the payment server, and providing the service content for the user after the verification succeeds.

10. The payment method using a wearable device according to claim 8, wherein the predetermined instruction is acknowledged to be received when the following condition is met:
a tapping instruction of the user is received, and tapping frequency falls within a first predetermined frequency range; or
a shaking instruction of the user is received, and shaking frequency falls within a second predetermined frequency range; or
a rotation instruction of the user is received, and rotation amplitude falls within a predetermined amplitude range.

11. The payment method using a wearable device according to claim 8, wherein after the payment server performs payment processing, the method further comprises:
sending, by the payment server, a payment notification to a mobile device bound to the wearable device.

12. The payment method using a wearable device according to claim 8, wherein the payment token of the wearable device is sent based on the predetermined instruction through Bluetooth or NFC.

13. The payment method using a wearable device according to claim 8, further comprising:
receiving an authorization request sent by a mobile device;
sending a user key based on the authorization request;
sending, by the mobile device, the user key to the payment server;
receiving, by the mobile device, the payment token generated by the payment server based on the user key; and
receiving the payment token sent by the mobile device.

14. The payment method using a wearable device according to claim 13, wherein the user key is generated by performing the following step:
randomly generating the user key based on a Bluetooth address and a device model of the wearable device after the authorization request is received.

15. A method for performing payment authorization on a wearable device, comprising the following steps:
sending an authorization request to a wearable device;
receiving a user key sent by the wearable device based on the authorization request;
sending the user key to the payment server;
receiving a payment token generated by the payment server based on the user key; and
sending the payment token to the wearable device to perform payment authorization on the wearable device.

16. A payment method using a wearable device, comprising the following steps:
receiving a payment token of a wearable device sent by a merchant device terminal;
performing verification based on the payment token; and
sending service content corresponding to the merchant device terminal to the merchant device terminal after the verification succeeds, and performing payment processing after the payment token is verified.

17. The payment method using a wearable device according to claim 16, wherein after payment processing is performed, the method further comprises:
sending a payment notification to a mobile device bound to the wearable device.

18. The payment method using a wearable device according to claim 16, further comprising:
sending, by the wearable device, the payment token to the merchant device terminal through Bluetooth or NFC.

19. The payment method using a wearable device according to claim 16, further comprising:
sending, by a mobile device bound to the wearable device, an authorization request to the wearable device;
receiving, by the mobile device, a user key sent by the wearable device based on the authorization request;
receiving the user key sent by the mobile device;
generating the payment token based on the user key, and sending the payment token to the mobile device; and
sending, by the mobile device, the payment token to the wearable device.

20. The payment method using a wearable device according to claim 19, wherein the user key is generated by performing the following step:
randomly generating, by the wearable device, the user key based on a Bluetooth address and a device model of the wearable device after receiving the authorization request.

21. A system for payment using a wearable device, comprising a wearable device, a merchant device terminal, and a payment server, wherein
the wearable device is configured to send a payment token of the wearable device;
the merchant device terminal is configured to: send the payment token to the payment server for verification, receive service content returned by the payment server, and provide the service content for a user; and
the payment server is configured to: perform verification based on the payment token, send the service content to the merchant device terminal after the verification succeeds, and perform payment processing after the payment token is verified.

22. The system for payment using a wearable device according to claim 21, wherein the payment server is further configured to send a payment notification to a mobile device bound to the wearable device.

23. The system for payment using a wearable device according to claim 21, wherein the wearable device sends the payment token through Bluetooth or NFC.

24. The system for payment using a wearable device according to claim 21, wherein the wearable device is further configured to: receive a predetermined instruction of the user, and send the payment token based on the predetermined instruction.

25. The system for payment using a wearable device according to claim 24, wherein the predetermined instruction is acknowledged to be received when the following condition is met:
the wearable device receives a tapping instruction of the user, and tapping frequency falls within a first predetermined frequency range; or
the wearable device receives a shaking instruction of the user, and shaking frequency falls within a second predetermined frequency range; or
the wearable device receives a rotation instruction of the user, and rotation amplitude falls within a predetermined amplitude range.

26. The system for payment using a wearable device according to claim 24, further comprising:
a mobile device bound to the wearable device, configured to: send an authorization request to the wearable device, receive a user key sent by the wearable device based on the authorization request, send the user key to the payment server, and send the received payment token generated by the payment server based on the user key to the wearable device.

27. The system for payment using a wearable device according to claim 26, wherein the user key is generated by performing the following step:
randomly generating, by the wearable device, the user key based on a Bluetooth address and a device model of the wearable device after receiving the authorization request.

28. A merchant device terminal, comprising:
a first receiving module, configured to receive a payment token of a wearable device sent by the wearable device;
a first sending module, configured to send the payment token to a payment server for verification;
a second receiving module, configured to receive service content returned by the payment server after the verification succeeds; and
a providing module, configured to provide the service content for a user.

29. The merchant device terminal according to claim 28, wherein the first receiving module receives, through Bluetooth or NFC, the payment token of the wearable device sent by the wearable device.

30. A wearable device, comprising:
a third receiving module, configured to receive a predetermined instruction of a user; and
a sending module, configured to send a payment token of the wearable device based on the predetermined instruction, wherein a merchant device terminal performs verification based on the payment token, and provides a merchandise transaction service for the user after the verification succeeds.

31. The wearable device according to claim 30, wherein the sending module sends the payment token of the wearable device based on the predetermined instruction through Bluetooth or NFC.

32. The wearable device according to claim 30, further comprising:
a fourth receiving module, configured to receive an authorization request sent by a mobile device bound to the wearable device to the wearable device;
a second sending module, configured to send a user key to the mobile device based on the authorization request, wherein the mobile device returns the payment token to the wearable device based on the user key; and
a fifth receiving module, configured to receive the payment token sent by the mobile device.

33. The wearable device according to claim 32, further comprising:
a generation module, configured to randomly generate the user key based on a Bluetooth address and a device model of the wearable device after the authorization request is received.

34. A mobile device, comprising:
a third sending module, configured to send an authorization request to a wearable device;
a sixth receiving module, configured to receive a user key sent by the wearable device based on the authorization request;
a fourth sending module, configured to send the user key to a payment server;
a seventh receiving module, configured to receive a payment token generated by the payment server based on the user key; and
a fifth sending module, configured to send the payment token to the wearable device to perform payment authorization on the wearable device.

35. A payment server, comprising:
an eighth receiving module, configured to receive a payment token of a wearable device sent by a merchant device terminal;
a verification module, configured to perform verification based on the payment token;
a sixth sending module, configured to send service content corresponding to the merchant device terminal to the merchant device terminal after the verification succeeds; and
a payment processing module, configured to perform payment processing after the payment token is verified.

36. The payment server according to claim 35, further comprising:
a notification module, configured to send a payment notification to a mobile device bound to the wearable device.
